# FASCICULE DE BREVET EUROPEEN

(11) **EP 0 721 382 B1**
(45) Date de publication et mention de la délivrance du brevet: **22.09.1999**
(21) Numéro de dépôt: 95926408.6
(22) Date de dépôt: 20.07.1995
(51) Int. Cl.: B05D 7/14, B05D 1/10

(54) **PROCEDE, DISPOSITIF ET INSTALLATION POUR REVETIR UN TUBE, NOTAMMENT UN TUBE DE PIPELINE**
VERFAHREN, VORRICHTUNG UND ANLAGE ZUM BESCHICHTEN VON ROHREN, INSBESONDERE PIPELINEN
METHOD, DEVICE AND APPARATUS FOR COATING A TUBE, PARTICULARLY A PIPELINE TUBE

(30) Priorité: 28.07.1994 FR 9409511
(43) Date de publication de la demande: 17.07.1996
(73) Titulaire: ISOTUB COATING, F-54240 Joeuf (FR)
(72) Inventeur: CAVALIE, Bernard, F-59240 Dunkerque (FR)
(74) Mandataire: Polus, Camille
(86) Numéro de dépôt international: FR9500979
(87) Numéro de publication internationale: WO9603222

(56) Documents cités:
- WO-A-92/03234
- WO-A-93/02802
- DE-A- 3 640 906
- DE-C- 3 639 417
- FR-A- 1 460 625
- US-A- 5 178 902
- DATABASE WPI Section Ch, Week 0693 Derwent Publications Ltd., London, GB; Class A14, AN 93-048263 & JP,A,04 371 832 ( NIPPON STEEL CORP) , 24 Décembre 1992
- PATENT ABSTRACTS OF JAPAN vol. 015 no. 177 (C-0829) ,7 Mai 1991 & JP,A,03 042078 (NIPPON STEEL CORP;OTHERS: 01) 22 Février 1991,

## Description

La présente invention a pour objet un procédé pour réaliser un *revêtement* de protection sur un tube et notamment sur un tube de pipeline susceptible d'être immergé ou enterré, procédé dans lequel on effectue des opérations de dépôt d'au moins une couche d'époxy anticorrosion, d'au moins une couche d'un matériau adhésif de type polypropylène et/ou polyéthylène, et éventuellement d'au moins une couche d'un matériau formant une enveloppe de protection.

Les tubes de pipeline sont généralement utilisés pour transporter dos hydrocarbures et il est important que la protection anticorrosion des tubes de pipeline soit assurée sur toute la longueur de la ligne de transport et en particulier sur les parties revêtues au droit des soudures de tubes. Cette protection permet de garantir la pérennité des pipelines.

De ce fait, les tubes doivent comporter un revêtement de protection permettant d'assurer la tenue à la corrosion dans les conditions de service qui tiennent compte des contraintes mécaniques, chimiques, électrochimiques et de température. De plus, l'épaisseur du revêtement de protection est un critère important pour les caractéristiques des tubes ainsi réalisés.

Lorsque les tubes sont destinés à être immergés, leur revêtement est en contact avec l'eau de mer et la composition chimique des matériaux constituant ledit revêtement est également un critère important de la qualité des tubes. De préférence, les matériaux doivent avoir une imperméabilité à l'eau assurant une absorption intérieure à 10 % sur une période d'immersion de trois jours.

Le revêtement est généralement réalisé après chauffage du tube, à une température comprise entre 200° et 260°C, nécessaire pour la polymérisation de certains types de matériaux utilisés pour le revêtement telle que la poudre époxy.

Il existe actuellement des installations industrielles de revêtement, comportant des moyens techniques importants, de grande dimension, et ayant l'inconvénient d'effectuer uniquement le revêtement des longueurs droites de tubes. De plus, l'utilisation de matériaux thermodurcissables et de matériaux thermoplastiques, nécessite des équipements tels qu'extrudeuse, cabine d'époxy poudre, poste de chauffage par induction, tunnel de refroidissement.

Les procédés et dispositifs connus pour réaliser un revêtement protecteur d'un tube présentent un autre inconvénient. Il est techniquement difficile de réaliser un revêtement protecteur comportant des couches de compositions chimiques variées.

Le document JP-A-30 42 078 décrit un procédé pour réaliser en revêtment de protection contre la corrosion de tubes métalliques dans lequel on dépose une couche d'apprêt d'un matérieau de type époxy, puis, par pulvérisation thermique, une couche de résine polyoléfinique un cette couche d'apprêt.

L'invention a pour but de proposer un procédé pour réaliser un revêtement de protection sur un tube métallique et notamment sur un tube de pipeline, permettant d'une part de s'affranchir des inconvénients mentionnés ci-dessus et d'autre part, d'obtenir un revêtement d'un tube ayant des caractéristiques particulières, la procédé pouvant être mis en oeuvre aussi bien on usine que sur le site d'un chantier.

L'invention a également pour but la réalisation, sur le site d'un chantier, d'une partie d'un même revêtement que celui réalisé en usine, de façon à assurer la continuité dudit revêtement sur des zones, par exemple de soudures reliant deux tubes.

L'invention a pour objet un procédé pour réaliser un revêtement de protection sur un tube susceptible d'être immergé ou enterré, revêtement pouvant être effectué plus particulièrement sur des raccordements de tubes soudés sur chantier, ou sur dos coudes, des cintres, dos accessoires, en usine, procédé dans lequel sont effectuées des opérations de dépôt, comprenant:
- le dépôt d'au moins une couche d'un matériau de type époxy anticorrosion,
- le dépôt d'au moins un matériau adhésif de type polypropylène et/ou polyéthylène, et éventuellement,
- le dépôt d'au moins une couche de matériau formant une enveloppe de protection, lesdites opérations de dépôt étant effectuées par projection de particules des matériaux à déposer, sous atmosphère contrôlée et sous flamme, au moyen d'au moins une torche de projection de particules.

De manière avantageuse, le procédé comprend les autres caractéristiques suivantes :

Préalablement aux opérations de dépôt,
- on abrase la surface du tube par sablage et/ou grenaillage,
- on préchauffe le tube à une température supérieure à 50°C et inférieure à 200°C.

Pour le dépôt,
- on projette à l'aide d'au moins une torche de projection de particules, des matériaux à l'état de poudre, choisis parmi un époxy anticorrosion, un polyéthylène modifié adhésif, un polypropylène modifié adhésif, un polyéthylène, un polypropylène.
- Les particules de matériaux à déposer sont projetées sous jet d'un gaz vecteur neutre.
- On protège le jet comprenant la poudre et son gaz vecteur au moyen d'un gaz protecteur neutre qui enrobe ledit jet.
- Le jet comprenant la poudre et son gaz vecteur, et le gaz protecteur sont entourés d'une flamme obtenue au moyen d'un combustible et d'un comburant.
- Les gaz vecteur et protecteur sont choisis parmi l'azote, l'argon.
- La flamme est obtenue au moyen d'un combustible choisi parmi l'acétylène, le crylène, le tétrène.
- La flamme est obtenue au moyen d'un comburant choisi parmi l'oxygène et les mélanges oxygène/azote.

On projette à l'aide d'une torche de 3 000 à 12 000 g/m²/h d'époxy et de 3 000 à 10 000 g/m²/h de matériau polypropylène et ou polyéthylène.

Le document WO-A-93 02 802 montre une torche de projection de particules de résine polyoléfinique nous atmosphère controlée et sous flamme, la torche étant alimentée par un conduit d'amenée de gaz vecteur et de particules, un conduit de gaz protecteur, un conduit de combustible et un conduit de comburant.

L'invention concerne également un dispositif de projection de particules sous atmosphère contrôlée et sous flamme, qui comprend en série ou moins une torche de projection de particules d'un matériau de type époxy anticorrosion, au moins une torche de projection de particules d'un matériau adhésif de type polypropylène et/ou polyéthylène, et éventuellement une torche de projection de particules d'au moins un matériau formant une enveloppe de protection, les torches étant alimentées simultanément par un conduit d'amenée de gaz vecteur et de particules, un conduit de gaz protecteur, un conduit de combustible, et un conduit de comburant. Dans des mises en ouvre avantageuses du dispositif figurent les d'autres caractéristiques suivantes :
- Le dispositif comprend en outre, en série, au moins un chalumeau de préchauffage
   - La torche de projection de particules comprend, associée au conduit du gaz vecteur, un moyen de contrôle du débit dos particules et un moyen de régulation dudit débit qui influe respectivement sur un distributeur et sur une vanne d'alimentation en particules.

L'invention concerne également une installation pour la réalisation du revêtement protecteur sur un tube et qui comprend un bâti comportant dos moyens do support et déplacement relatif en rotation et/ou en translation du tube et un dispositif de projection de particules sous flamme et sous, atmosphère contrôlée, tel que décrit précédemment.

De manière avantageuse d'autres caractéristiques de l'installation sont :
- elle comprend, en outre, des moyens de préchauffage du tube,
- elle comprend en outre, en série, des moyens de sablage, et/ou de grenaillage, et/ou de chromatation,
- elle comprend un moyen de refroidissement du tube revêtu situé on aval du dispositif de projection par rapport au sons relatif de déplacement dudit tube et du dispositif.

L'invention concerne également un tube comportant un revêtement protecteur et obtenu par le procédé, décrit précédemment ledit revêtement comportant successivement une couche d'époxy, une couche d'adhésif de polyéthylène et/ou polypropylène modifié formant une enveloppe dont l'épaisseur est supérieure à 0,5 mm. et éventuellement, en outre, une couche formant enveloppe d'au moins un matériau choisi parmi le polypropylène et le polyéthylène dont l'épaisseur est supérieure à 0,5 mm, l'enveloppe pouvant être chargée de granulats métalliques et ou de matières minérales.

La description qui suit, et les dessins annexés, le tout donné à titre d'exemple non limitatif fera bien comprendre l'invention.
La figure 1 présente en section un tuba selon l'invention réalisé par le procédé et dans l'installation selon l'invention.
La figure 2 présente un schéma explicatif d'un dispositif salon l'invention.
La figure 3 présente un schéma d'une torche et d'un moyen de contrôle et de régulation du débit de particules projetées par la torche.
La figure 4 présente un schéma d'une installation salon l'invention.
Les figures 5A et 5B présentent un exemple d'application du procédé sur le site d'un chantier de construction de pipeline ou de réparation de pipeline.

Les revêtements de protection, notamment anticorrosion de tubes sont habituellement réalisés par différentes méthodes telles que extrusion , poudrage électrostatique, pulvérisation pneumatique, application de bandes ou de manchons, imprégnation et enroulement.

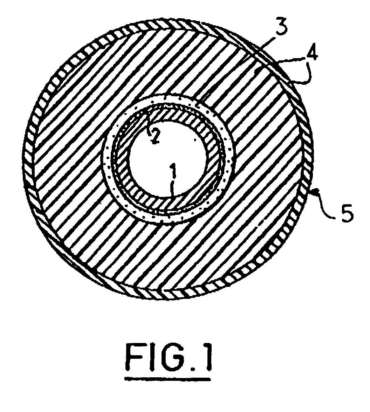

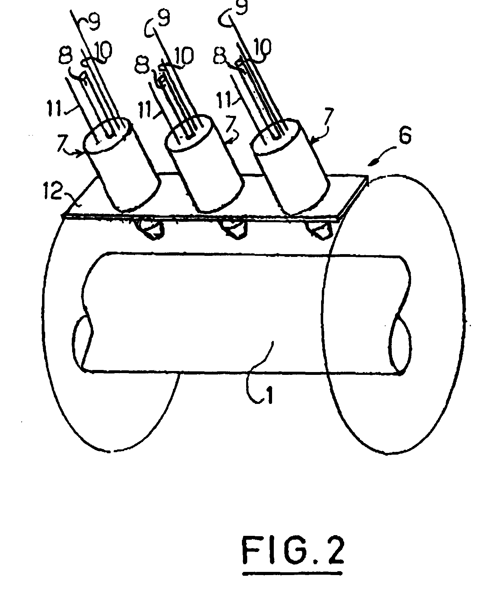

Ces méthodes permettent le dépôt de plusieurs couches de matériaux de composition différentes, généralement par une succession d'opérations indépendantes les unes des autres. De ce fait, les différentes couches concentriques doivent être compatibles du point de vue adhérence et tenue mécanique. Pour effectuer sur un tube 1 de pipeline, représenté sur la figure 1 ,des opérations de dépôt de couches, comme par exemple une couche d'époxy anticorrosion 2 , une couche d'un matériau adhésif 3 et au moins une couche d'un matériau thermoplastique 4 tel que polyéthylène, polypropylène, ou Rilsan, les différentes couches formant ensemble un revêtement 5 , on utilise, salon l'invention, un dispositif 6 de projection de particules sous atmosphère contrôlée et sous flamme, comprenant au moins une torche de projection de particules, comme représenté sur la figure 2.

Avec le dispositif 6 de projection sous flamme, de particules de matériau à l'état de poudre, il est possible de réaliser un revêtement 5 ayant dos caractéristiques améliorées avec, pour avantage particulier, le fait, qu'avant dépôt, on chauffe le tube 1 à moins de 200°C.

La fait d'abaisser la température à laquelle on réalise le dépôt présente, outre un moindre coût d'énergie l'avantage d'avoir une meilleure homogénéisation de la température de dépôt et une plus grande souplesse d'utilisation sur un chantier. L'ajustement de la température assurée par flamme pour le dépôt d'un matériau particulier permet une diminution sensible du fluage du revêtement adjacent, ce qui est particulièrement intéressant dans le cas de revêtement 5 de joints soudés sur le site du chantier. Un refroidissement plus aisé est assuré au tube 1 ainsi revêtu.

On a constaté que les matériaux utilisés par d'autres techniques connues pouvaient être utilisés sous forme de poudre et projetés par une torche 7 sous jet d'un gaz vecteur neutre comme par exemple de l'azote, Dans le mode de projection utilisé dans l'invention, les jets de gaz vecteur et protecteur sont entourés d'une flamme obtenue par la combustion d'un gaz, tel que l'acétylène, le crylène ou le tétrène, associé à un comburant tel que l'oxygène ou un mélange oxygène/azote. Le contrôle de l'atmosphère de dépôt au niveau de la torche, notamment par un gaz protecteur, est indispensable pour éviter la dégradation des polymères utilisés.

Ainsi l'utilisation d'un dispositif 6 de projection de particules sous atmosphère contrôlée et sous flamme, assure une liaison chimique et mécanique des couches de différents matériaux. La projection quasi simultanée des poudres assure également une transition progressive en densité, d'un matériau d'une couche avec le matériau de la couche suivante, ce qui crée un interface composite.

Les particules projetées à l'état de poudre sont choisies avantageusement parmi un époxy anticorrosion, un polyéthylène modifié adhésif, un polypropylène modifié adhésif, un polyéthylène, un propylène ou un Rilsan.

Une première couche projetée de particules d'époxy anticorrosion est indispensable pour le revêtement de pipeline.

Le chauffage par induction connu de l'art antérieur est difficile à mettre en oeuvre sur un chantier. Il est avantageusement remplacé par un chauffage par flamme, ce qui réduit considérablement la complexité de l'installation pour la mise en oeuvre du procédé.

Le procédé salon l'invention et son dispositif 6 de projection de particules sont particulièrement intéressants sur un chantier.

Le chauffage par flamme effectué simultanément à l'opération de projection de particules destinées a former une couche du revêtement 5 assure, par un apport constant d'énergie thermique, et contrairement à un chauffage préalable, des conditions physiques constantes, quelque soit l'épaisseur de la couche déposée. Il permet le dépôt d'une couche d'épaisseur désirée, sans limitation on épaisseur.

En effet, un chauffage préalable impose une limitation en épaisseur de la couche déposée du fait que l'énergie thermique du tube d'acier diffuse dans les différents matériaux dont est composé le revêtement 5 et modifie l'état de la couche on cours de formation.

En résumé, avec la procédé selon l'invention, il est désormais possible d'ajuster las épaisseurs des couches en fonction des nécessités, en particulier, les revêtements peuvent être réalisés avec des épaisseurs do l'ordre de 0,5mm, 10mm, voire 20mm ou plus.

La figure 2 présente un exemple de dispositif 6 comprenant en série au moins une torche 7 do projection de particules d'époxy anticorrosion 2, au moins une torche 7 de projection de particules d'adhésif 3 de polypropylène modifié ou d'adhésif 3 de polyéthylène modifié, et éventuellement une torche 7 de projection de particules d'au moins un matériau formant enveloppe 4, polyéthylène et/ou polypropylène, les différentes torches 7 étant alimentées simultanément par un conduit 8 d'amenée de gaz vecteur et de poudre, un conduit de gaz protecteur 9 un conduit de combustible 10, un conduit de comburant 11 .

Deux exemples de réalisation particuliers peuvent être envisagés:
1.- un revêtement en 2 couches : une couche d'époxy 2, et une couche de polyéthylène modifié adhésif ou de polypropylène modifié adhésif 3 formant elle-même une enveloppe 4.
2.- un revêtement en 3 couches : une couche d'époxy 2, une couche de polyéthylène adhésif ou de polypropylène adhésif 3, et une couche de polyéthylène ou une couche de polypropylène formant une enveloppe 4 .

Las différentes torches 7 peuvent être placées sur une ou plusieurs rampes 12 parallèles au tube 1 , ou encore sur une succession de couronnes ayant chacune sa fonction propre.

Ainsi le dispositif 6 peut comprendre, en plus, une série de chalumeaux de préchauffe, non représentés sur la figure, associée aux torches 7 de dépôt et pouvant être placés soit sur la ou les rampes 12 , soit sur au moins une couronne.

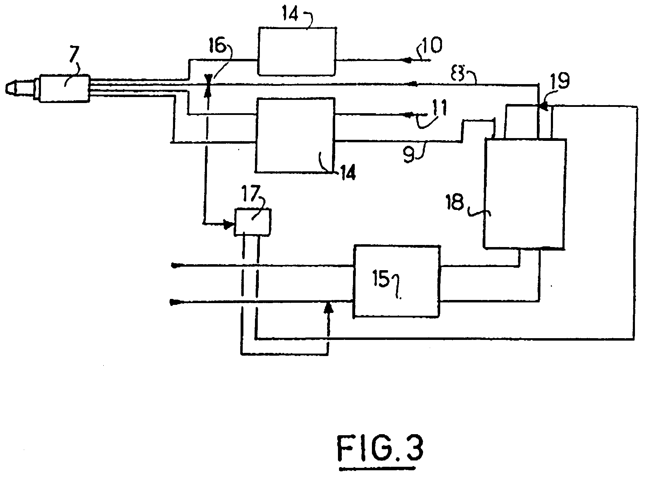

Comme représenté sur la figure 3, une torche 7 de dépôt du dispositif comprend une arrivée de gaz vecteur et une arrivée de gaz protecteur régulées par un distributeur 18. La torche 7 est connectée au distributeur 18 par les conduits 8 et 9 pour son alimentation en gaz vecteur et poudre, et en gaz protecteur. Selon l'invention, on associe au conduit du gaz vecteur 8, un moyen de contrôle 16 du débit de la poudre, et on moyen de régulation 17 dudit débit, régulation 17 qui influe respectivement sur le distributeur 18 et une vanne 19 d'alimentation de poudre.

En effet, le dispositif (6) est, en particulier, destiné à déposer des couches d'épaisseur relativement épaisses, supérieures à 0,5 mm et pouvant atteindre plusieurs centimètres. La torche utilisée doit être commandée et contrôlée en débit de poudre pour d'une part, assurer une parfaite homogénéité de l'épaisseur de la couche et d'autre part, assurer une vitesse de dépôt compatible avec les exigences industrielles ou de chantier, par exemple la réalisation d'un revêtement pour joint de soudure sur une barge de pose de pipeline.

Ainsi les torches 7 selon l'invention permettent, dans un exemple d'application une projection de 3 000 à 12 000 g/m²/h d'époxy et 3 000 à 10 000 g/m²/h de polypropylène et/ou polyéthylène.

Un avantage de l'invention est l'application avec une torche munie d'un gaz protecteur de jet qui permet de conserver les propriétés chimiques et/ou de résistance au vieillissement thermique du ou des matériaux, ce qui est essentiel dans l'application de plusieurs couches successives.

Les liaisons fonctionnelles contenues dans un polymère, préservées selon l'invention grâce à l'utilisation d'une torche de projection sous atmosphère contrôlée,sont capables de réagir chimiquement avec les liaisons époxy,ce qui permet d'obtenir une association de différentes couches avec un niveau d'adhérence élevé l'adhérence étant de ce fait chimique et mécanique.

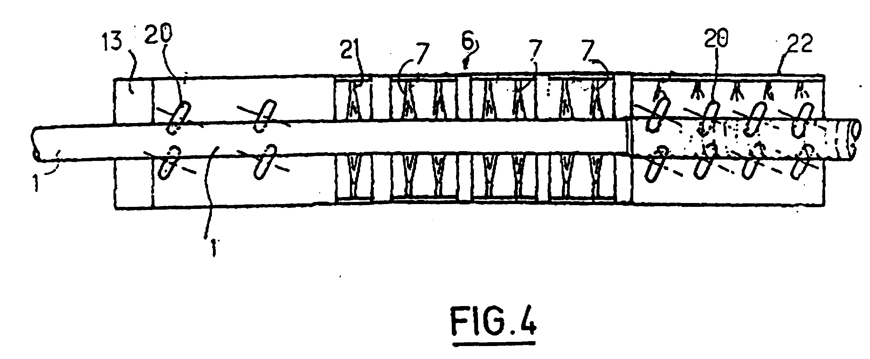

L'invention concerne également une installation pour la réalisation d'un revêtement protecteur sur un tube (1) avec le procédé et le dispositif décrits, installation qui comprend un bâti 13 comportant, comme représenté sur la figure 4, des moyens de support et de déplacement 20 relatif en rotation et/ou en translation du tube 1 et du dispositif 6 de projection de particules sous flamme et sous atmosphère contrôlée.

L'installation peut être effectivement réalisée soit en utilisant un dispositif 6 de projection en couronne, comme représenté sur la figure 4, la tube 1 se déplaçant longitudinalement en translation ou en rotation et en translation, soit en utilisant un dispositif 6 de projection se déplaçant en rotation et en translation autour d'un tube fixe, soit encore, de manière générale, on combinant le mouvement du dispositif 6 et du tube 1 de façon à ce que toute la surface dudit tube soit couverte d'un dépôt homogène.

On peut concevoir, pour la réalisation d'un revêtement d'un tronçon de pipeline ou d'un joint entre deux tubes revêtus, que la dispositif 6 soit mobile en rotation et translation autour du/des tubes fixes.

L'installation peut comprendre en plus du dispositif, avec ou sans ses moyens de préchauffage 21 sous forme de chalumeaux, dos moyens de sablage, de grenaillage, de chromatation, non représentés sur la figure ou encore des moyens de refroidissement 22 du tube revêtu.

L'invention concerne également le tube réalisé suivant le procédé comme représenté sur la figure 1, que l'on peut fabriquer comme suit

Avan: l'application du revêtement 5 , le tube 1 subit un nettoyage par sablage ou grenaillage. Ensuite, le tube 1 en acier est légèrement chauffé pour enlever toutes traces d'humidité. On élève la température du tube 1 pour qu'il atteigne environ 50°C au moyen d'un chalumeau de préchauffe pouvant être associé au dispositif de projection de particules.

Une pulvérisation d'époxy en poudre 2 est appliquée sur le tube au moyen des torches 7 de projection de poudre d'époxy, la couche 2 d'époxy assurant une protection contre la corrosion.

Simultanément, ou après un temps défini, on applique une couche 3 de polyéthylène modifié avec de l'anhydride maléique ou une couche 3 de polypropylène modifié également avec de l'anhydride maléique, afin d'assurer un caractère adhésif à ladite couche. Cette couche peut former également une enveloppe de protection du tube.

De préférence, simultanément, une troisième couche et/ou une quatrième couche constituée, soit d'un polyéthylène, soit d'un polypropylène, sont déposées pour constituer une enveloppe 4 de protection pouvant être une protection anticorrosion, contre les chocs mécaniques ou thermiques.

Les projections de poudre au moyen de torches 7 placées en série et à une distance proche les unes des autres assurent, lors du changement de composition des couches, une zone de transition à l'interface de deux couches successives, transition progressive allant de la composition du matériau de la couche inférieure vers le composition du matériau de la couche directement supérieure associant les couches du point de vue physico-chimique et mécanique.

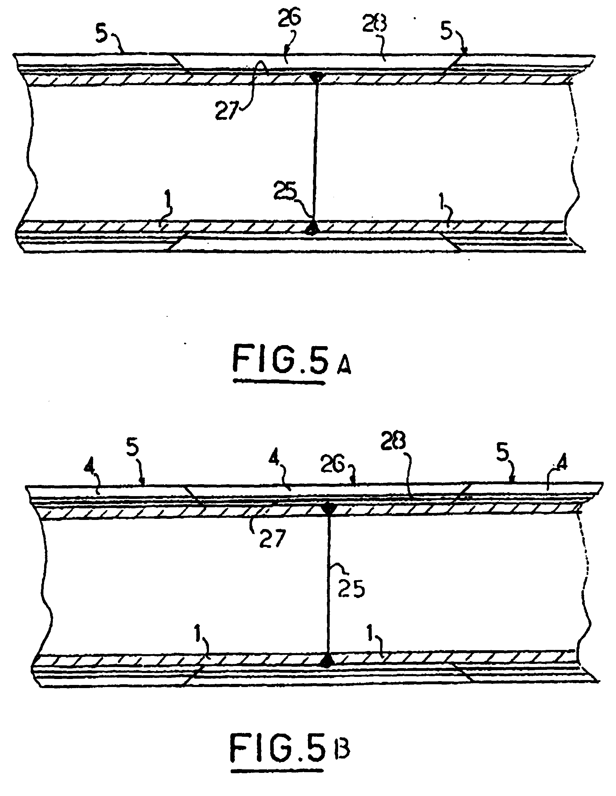

Les figures 5A et 5B présentent un exemple d'application du procédé. Il est possible à l'aide du dispositif selon l'invention d'effectuer sur un chantier au niveau d'une zone de soudure 25 entre deux tubes 1 revètus industriellement en usine, un raccord 26, entre les deux revêtements 5 des tubes 1. Le raccord 26 représenté sur la figure 5A est réalisé par un dépôt sous torche d'une couche d'époxy anticorrosion 27, puis d'une couche par exemple de polypropylène ou polyéthylène modifiés adhésifs 28 formant l'enveloppe. Le raccord 26 peut également être réalisé comme représenté sur la figure 5B par le dépôt d'une couche d'époxy anticorrosion 27, puis d'uns couche de polypropylène ou polyéthylène modifiés adhésifs 28 suivi d'un dépôt de polyéthylène ou polypropylène formant une enveloppe 4 du revêtement 5, toujours au moyen d'une torche de projection de particules.

Un tel procédé selon l'invention permet :
- de réaliser un revêtement avec une grande facilité de mise en oeuvre et pouvant atteindre des épaisseurs supérieurs à 0,5 mm,
- d'appliquer des matériaux et notamment les matériaux cités sur un tube faiblement chauffé,
- d'assurer une polymérisation de la couche d'époxy à une température Inférieure à 200° C ce qui est impossible à obtenir par d'autres méthodes conventionnelles,
- de réaliser certains types de revêtement sur des pièces qu'il est impossible de chauffer a des températures supérieures à environ 200°C.
- d'ajuster les températures de dépôt d'une couche de matériau par rapport à l'autre couche, au début de l'opération de dépôt et, pendant la projection de particules pour la réalisation de celui-ci.
- de réaliser des revêtements externes au tube, mais également internes au tube du type anticorrosion, isolation thermique, anti-mouillant, revêtement glissant permettant de diminuer les portes de charge etc.

Le dispositif de projection de particules sous flamme et sous atmosphère contrôlée permet :
- de réailser différentes couches de revêtement d'épaisseur désirée, tant dans une usine que sur le site d'un chantier sans déplacement de gros moyens techniques,
- de reconstituer une portie du revêtement sur un chantier avec des propriétés quasiment identiques à celles du revêtement du tube réalisé en usine, en assurent une continuité du revêtement sur toute la longueur de la conduite.

## Revendications

1. Procédé pour réaliser un revêtement de protection sur un tube susceptible d'être immergé ou enterré, procédé dans lequel on effectue des opérations de dépôt, comprenant :
le dépôt d'au moins une couche (2) d'un matériau de type époxy anticorrosion,
le dépôt d'au moins une couche d'un matériau adhésif (3) de type polypropylène et/ou polyéthylène, et éventuellement
le dépôt d'au moins une couche d'un matériau formant une enveloppe (4) de protection,
lesdites opérations de dépôt étant effectuées par projection de particules des matériaux à déposer, sous atmosphère contrôlée et sous flamme, au moyen d'au moins une torche de projection de particules.

2. Procédé selon la revendication 1, caractérisé en ce que préalablement aux opérations de dépôt, on abrase la surface du tube (1) par sablage et/ou grenaillage.

3. Procédé selon la revendication 1, caractérisé en ce que préalablement aux opérations de dépôt, on préchauffe le tube á une température supérieure à 50°C et inférieure à 200°C.

4. Procédé selon la revendication 1, caractérisé en ce que l'on projette, à l'aide d'au moins une torche de projection de particules, des matériaux à l'état de poudre choisis parmi un époxy anticorrosion, un polyéthylène modifié adhésif, un polypropylène modifié adhésif, un polyéthylène, un polypropylène.

5. Procédé selon les revendications 1 à 4, caractérisé en ce que lesdites particules de matériaux sont projetées sous jet de gaz vecteur neutre.

6. Procédé selon la revendication 5, caractérisé en ce que l'on protège le jet comprenant la poudre et son gaz vecteur au moyen d'un gaz protecteur neutre qui enrobe ledit jet.

7. Procédé selon la revendication 6, caractérisé en ce que le jet comprenant la poudre et son gaz vecteur, et le gaz protecteur sont entourés d'une flamme obtenue au moyen d'un combustible et d'un comourant.

8. Procédé selon les revendications 5 et 6, caractérisé en ce que les gaz vecteur et protecteur sont choisis parmi l'azote l'argon.

9. Procédé selon les revendications 1 a 8, caractérisé en ce que la flamme est obtenue au moyen d'un combustible choisi parmi l'acetylène, le crylène, le tetrène.

10. Procedé selon les revendications 1 a 9, caractérisé en ce que la flamme est obtenue au moyen d' un comburant choisi parmi l'oxygène et les melanges oxygène/azote.

11. Procédé selon les revendications 1 à 10 caractérisé on ce que l'on projette, à l'aide d'une torche. 3 000 à 12 000 g/m²/h d'époxy.

12. Procédé salon las revendications 1 8 10 caractérisé en ce que l'on projette, à l'aide d'une torche, 3 000 à 10 000 g/m²/h du polyéthylène et/ou polypropylène.

13. Dispositif de projection de particules sous atmosphère contrôlée et sous flamme pour réaliser un revêtement de protection sur un tube par la mise en oeuvre du procédé selon les revendications 1 à 12, ledit dispositif comprenant, en série, au moins une torche (7) de projection de particules d'un matériau de type époxy anticorrosion, au moins une torche (7) de projection de particules d'un matériau adhésif de type polypropylène et/ou polyéthylène, et éventuellement une torche (7) de projection de particules d'au moins un matériau formant une enveloppe de protection, les torches (7) étant alimentées simultanément par un conduit d'amenée de gaz vecteur et de particules (8), un conduit de gaz protecteur (9), un conduit de combustible (10), et un conduit de comburant (11).

14. Dispositif selon la revendication 13 caractérise en ce qu'il comprend, en outre, en série, au moins un chalumeau de préchauffe.

15. Dispositif selon la revendication 13 ou 14, caractérisé en ce que la torche (7) de projection de particules comprend, associée au conduit (8) d'alimentation en gaz vecteur et en particules, un moyen de contrôle du débit des particules (16) et un moyen de régulation (17) dudit débit qui influe respectivement sur un distributeur (18) et sur une vanne (19) d'alimentation en particules.

16. Installation pour la réalisation d'un revêtement protecteur sur un tube (1) avec le procédé selon l'une des revendications 1 à 12, comprenant un bâti (13) comportant des moyens de support et do déplacement (20) relatif en rotation et/ou en translation du tube (1) et un dispositif (6) de projection de particules sous flamme et sous atmosphère contrôlée, selon l'une quelconque des revendications 13 à 15.

17. Installation selon la revendication 16, caractérisé en ce qu'elle comprend, en outre, des moyens de préchauffage (21) du tube (1).

18. Installation selon la revendication 16 caractérisé en ce qu'elle comprend, en outre, en série, des moyens de sablage et/ou de grenaillage et ou de chromatation.

19. Installation selon les revendications 16 à 18, caractérisée en ce qu'elle comprend un moyen de refroidissement (22) du tube revétu, situé en aval du dispositif de projection par rapport au sens relatif de déplacement dudit tube et du dispositif.

20. Tube comportant un revêtement protecteur et obtenu par le procédé selon l'une quelconque des revendications 1 à 12, ledit revêtement comportant successivement une couche (2) d'époxy et une couche d'adhésif (3) de polyéthylène ou de polypropylène modifiés formant une enveloppe dont l'épaisseur est supérieure à 0,5 mm.

21. Tube, selon la revendication 20, caractérisé en ce qu'il comporte on outre une couche formant une enveloppe (4) de matériau choisi parmi le polyéthylène et le polypropylène dont l'épaisseur est supérieure à 0,5mm.

22. Tube salon les revendications 20 et 21 caractérisé en ce que l'enveloppe est chargée do granulats métalliques et/ou de matières minérales.

## Claims

1. Method for producing a protective coating for a tube liable to be immersed or buried; method in which deposition operations are effected, including:
the deposition of at least one layer (2) of an epoxy anti-corrosion material
the deposition of at least one layer of an adhesive material (3) of the polypropylene and/ or polyethylene type and if necessary
the deposition of at least one layer of a material forming a protective envelope (4),
the said deposition operations being effected by means of spraying particles of the materials to be deposited, under controlled atmosphere and under flame, by means of at least one particle spray gun.

2. Method according to claim 1, characterised by the fact that prior to the deposition operations the surface of the tube (1) is abraded by sand-blasting and/ or shot-blasting.

3. Method according to claim 1, characterised by the fact that prior to the deposition operations the tube is pre-heated to a temperature greater than 50°C and less than 200°C.

4. Method according to claim 1, characterised by the fact that, using at least one particle spray gun, materials are sprayed in a powdered state, chosen amongst in anti-corrosion epoxy, a modified polyethylene adhesive, a modified polypropylene adhesive, a polyethylene and a polypropylene.

5. Method according to claims 1 to 4, characterised by the fact that the said particles of material are sprayed by a neutral vector gas jet.

6. Method according to claim 5, characterised by the fact that the jet comprising the powder and its vector gas are protected by means of a neutral protector gas which encases the said jet.

7. Method according to claim 6, characterised by the fact that the jet comprising the powder and its vector gas and the protector gas are surrounded by a flame obtained by means of a fuel and an oxidiser.

8. Method according to claims 5 and 6, characterised by the fact that the vector gas and protector are chosen amongst nitrogen and argon.

9. Method according to claims 1 to 8, characterised by the fact that the flame is obtained by means of a fuel chosen amongst acetylene, crylene tetrene.

10. Method according to claims 1 to 9, characterised by the fact that the flame a obtained by means of an oxidiser chosen amongst oxygen and oxygen/ nitrogen mixtures.

11. Method according to claims 1 to 10, characterised by the fact that epoxy is sprayed using a gun at the rate of 3,000 to 12,000 g/m²/h.

12. Method according to claims 1 to 10, characterised by the fact that polyethylene and/ or polypropylene is/ are sprayed using a gun at the rate of 3,000 to 10,000 g/m²/h.

13. Device for spaying particles under a controlled atmosphere and under flame to produce a protective coating on a tube by implementation of the method according to claims 1 to 12, the said device including, in series, at least one gun (7) for spraying particles of a material of the epoxy anti-corrosion type, at least one gun (7) for spraying particles of an adhesive material of the polypropylene and/ or polyethylene type and if necessary a spray gun (7) for particles of at least one material forming a protective envelope, the guns (7) being supplied simultaneously by a supply pipe for the vector gas and the particles (8), a supply pipe for the protective gas (9), a fuel supply pipe (10), and an oxidiser supply pipe (11).

14. Device according to claim 13 characterised by the fact that it additionally includes, in series, at least one pre-heating blowpipe.

15. Device according to claim 13 or 14 characterised by the fact that the particle spray gun (7) includes, in conjunction with the vector gas and particle supply pipe, (8) a means of controlling the flow of particles (16) and a means of regulating (17) the said flow which has an influence respectively on a distributor (18) and on a valve (19) for the particle supply.

16. Installation for the production of a protective coating on a tube (1) with the method according to one of claim 1 to 12, including a flame (13) consisting of means of support and of movement (20) relative to the rotation and/ or translation of the tube (1) and a device (6) for spraying particles under controlled atmosphere and under flame, according to any one of claims 13 to 15.

17. Installation according to claim 16 characterised by the fact that it includes, additionally, means of pre-heating (21) the tube (1).

18. Installation according to claim 16 characterised by the fact that it includes, additionally, in series means of sand-blasting and/ or shot-blasting and/ or of chromate treatment.

19. Installation according to claims 16 to 18 characterised by the fact that it includes a means of cooling (22) the coated tube, situated downstream of the device for spraying in relation to the relative direction of movement of the said tube and of the device.

20. Tube including a protective coating and obtained by the method according to any one of claims 1 to 12, the said coating comprising successively, one layer (2) of epoxy and one layer of adhesive (3) made of modified polyethylene or polypropylene forming a envelope whose thickness is greater than 0.5 mm.

21. Tube according to claim 20, characterised by the fact that it additionally includes a layer forming an envelope (4) of material, selected from amongst polyethylene or polypropylene whose thickness is greater than 0.5 mm.

22. Tube according to claims 20 and 21, characterised by the fact that the envelope is charged with metallic aggregates and/ or mineral substances.

## Patentansprüche

1. Verfahren zum Herstellen einer Schutzbeschichtung auf einem untertauchbaren oder eingrabbaren Rohr, mit folgenden Arbeitsschritten zum Auftragen der Beschichtung:
Auftragen wenigstens einer Schicht (2) aus einem epoxydhaltigen Korrosionsschutzmaterial,
Auftragen wenigstens einer Schicht aus einem Polypropylen und/oder Polyethylen enthaltenden Klebermaterial (3), und eventuell
Auftragen Wenigstens einer Schicht aus einem eine Schutzhülle (4) bildenden Material,
wobei die das Auftragen betreffenden Arbeitsschritte durch Aufstrahlen von Teilchen der aufzutragenden Materialien unter kontrollierter Atmosphäre und unter Flammwirkung mittels wenigstens eines Teilchenflammstrahlers erfolgen.

2. Verfahren nach Anspruch 1, dadurch gekennzeichnet, daß vor den das Auftragen betreffenden Arbeitsschritten die Oberfläche des Rohrs (1) durch Sandstrahlen und/oder Kugelstrahlen abgetragen wird.

3. Verfahren nach Anspruch 1, dadurch gekennzeichnet, daß vor den das Auftragen betreffenden Arbeitsschritten das Rohr (1) auf eine über 50°C und unter 200°C liegende Temperatur vorerwärmt wird.

4. Verfahren nach Anspruch 1, dadurch gekennzeichnet, daß mit Hilfe wenigstens eines Teilchenflammstrahlers pulverförmige Materialien aufgestrahlt werden, die aus folgender Gruppe gewählt sind: Korrosionsschutzepoxyd, modifiziertes klebendes Polyethylen, modifiziertes klebendes Polypropylen, Polyethylen, Polypropylen.

5. Verfahren nach den Ansprüchen 1 bis 4, dadurch gekennzeichnet, daß die genannten Materialteilchen mit einem neutralen Trägergasstrahl aufgestrahlt werden.

6. Verfahren nach Anspruch 5, dadurch gekennzeichnet, daß der Strahl, der das Pulver und sein Trägergas enthält, mittels eines neutralen Schutzgases, das den Strahl einhüllt, geschützt wird.

7. Verfahren nach Anspruch 6, dadurch gekennzeichnet, daß der Strahl, der das Pulver und sein Trägergas enthält, und das Schutzgas von einer Flamme umgeben sind, die mittels eines Brennstoffs und eines Sauerstoffträgers erzielt wird.

8. Verfahren nach den Ansprüchen 5 und 6, dadurch gekennzeichnet, daß das Trägergas und das Schutzgas aus folgender Gruppe gewählt sind: Stickstoff, Argon.

9. Verfahren nach den Ansprüchen 1 bis 8, dadurch gekennzeichnet, daß die Flamme mittels eines Brennstoffs erzielt wird, der aus folgender Gruppe gewählt ist: Acetylen, Crylen, Tetren.

10. Verfahren nach den Ansprüchen 1 bis 9, dadurch gekennzeichnet, daß die Flamme mittels eines Sauerstoffträgers erzielt wird, der aus folgender Gruppe gewählt ist: Sauerstoff, Sauerstoff/Stickstoff-Gemische.

11. Verfahren nach den Ansprüchen 1 bis 10, dadurch gekennzeichnet, daß mit Hilfe eines Teilchenflammstrahlers 3.000 bis 12.000 g/m²/h Epoxyd aufgestrahlt werden.

12. Verfahren nach den Ansprüchen 1 bis 10, dadurch gekennzeichnet, daß mit Hilfe eines Teilchenflammstrahlers 3.000 bis 10.000 g/m²/h Polyethylen und/oder Polypropylen aufgestrahlt werden.

13. Einrichtung zum Aufstrahlen von Teilchen unter kontrollierter Atmosphäre und unter Flammwirkung, zur Herstellung einer Schutzbeschichtung auf einem Rohr durch Durchführung des Verfahrens nach den Ansprüchen 1 bis 12, wobei die Einrichtung folgende Merkmale aufweist: in Reihenanordnung wenigstens einen Flammstrahler (7) zum Aufstrahlen von Teilchen eines epoxydhaltigen Korrosionsschutzmaterials, wenigstens einen Flammstrahler (7) zum Aufstrahlen von Teilchen eines Polypropylen und/oder Polyethylen enthaltenden Klebermaterials und eventuell einen Flammstrahler (7) zum Aufstrahlen von Teilchen wenigstens eines Materials, das eine Schutzhülle bildet, wobei die Flammstrahler (7) gleichzeitig aus einer Leitung zur Zufuhr von Trägergas und Teilchen (8), einer Schutzgasleitung (9), einer Brennstoffleitung (10) und einer Sauerstoffträgerleitung (11) versorgt werden.

14. Einrichtung nach Anspruch 13, dadurch gekennzeichnet, daß sie in Reihenanordnung ferner wenigstens einen Vorwärmbrenner aufweist.

15. Einrichtung nach Anspruch 13 oder 14, dadurch gekennzeichnet, daß der Teilchenflammstrahler (7) im Zusammenhang mit der für die Zufuhr von Trägergas und Teilchen dienenden Leitung (8) ein Organ (16) zur Steuerung des Teilchenstroms und ein Organ (17) zur Regelung des Teilchenstroms aufweist, das auf einen Verteiler (18) bzw. ein Ventil (19) zur Teilchenzufuhr wirkt.

16. Anlage zum Herstellen einer Schutzbeschichtung auf einem Rohr (1) mittels des Verfahrens nach einem der Ansprüche 1 bis 12, mit einem Gestell (13), das Vorrichtungen (20) zum Tragen des Rohrs (1) und zur rotatorischen und/oder translatorischen Relativbewegung des Rohrs (1) sowie eine Vorrichtung (6) zum Aufstrahlen von Teilchen unter Flammwirkung und unter kontrollierter Atmosphäre nach einem der Ansprüche 13 bis 15 aufweist.

17. Anlage nach Anspruch 16, dadurch gekennzeichnet, daß sie ferner eine Vorrichtung (21) zum Vorerwärmen des Rohrs (1) aufweist.

18. Anlage nach Anspruch 16, dadurch gekennzeichnet, daß sie in Reihenanordnung ferner eine Vorrichtung zum Sandstrahlen und/oder Kugelstrahlen und/oder Chromatieren aufweist.

19. Anlage nach den Ansprüchen 16 bis 18, dadurch gekennzeichnet, daß sie eine Vorrichtung (22) zum Kühlen des beschichteten Rohrs aufweist, die der Strahlvorrichtung in bezug auf die Richtung der Relativbewegung des Rohrs und der Vorrichtung nachgelagert ist.

20. Rohr mit Schutzbeschichtung, das mittels des Verfahrens nach einem der Ansprüche 1 bis 12 hergestellt wurde, wobei die Beschichtung aufeinanderfolgend eine Epoxydschicht (2) und eine Kleberschicht (3) aus modifiziertem Polyethylen oder modifiziertem Polypropylen zur Bildung einer Hülle, deren Dicke mehr als 0,5 mm beträgt, aufweist.

21. Rohr nach Anspruch 20, dadurch gekennzeichnet, daß es ferner eine Schicht aufweist, die eine Hülle (4) bildet, dessen Material aus Polyethylen und Polypropylen gewählt ist und dessen Dicke mehr als 0,5 mm beträgt.

22. Rohr nach den Ansprüchen 20 und 21, dadurch gekennzeichnet, daß die Hülle mit metallischen Granulaten und/oder Mineralstoffen durchsetzt ist.
